(19) Europäisches Patentamt
European Patent Office
Office européen des brevets

(11) EP 4 782 843 A1

(12) EUROPEAN PATENT APPLICATION

(43) Date of publication:
29.07.2026 Bulletin 2026/31

(21) Application number: 25275003.9

(22) Date of filing: 24.01.2025

(51) International Patent Classification (IPC):
G01P 15/125 (2006.01)    G01P 15/13 (2006.01)
G01P 21/00 (2006.01)    G01P 15/08 (2006.01)

(52) Cooperative Patent Classification (CPC):
G01P 21/00; G01P 15/125; G01P 15/131;
G01P 2015/0814

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: ATLANTIC INERTIAL SYSTEMS
LIMITED
Plymouth, Devon PL6 6DE (GB)

(72) Inventors:
• ARMIN, Ardalan
Plymouth,
Devon, PL6 6DE (GB)
• FELL, Christopher
Plymouth,
Devon, PL6 6DE (GB)
• ETOR, David
Plymouth,
Devon, PL6 6DE (GB)

(74) Representative: Dehns
10 Old Bailey
London EC4M 7NG (GB)

(54) ACCELEROMETER CALIBRATION

(57) An apparatus comprising a controller (203) and an accelerometer (201). The accelerometer (201) comprises a proof mass moveable along a sensing axis in response to an applied acceleration, one or more fixed electrodes and control circuitry. The controller (203) is configured to use the control circuitry to apply a series of reference voltages to the one or more fixed electrodes. For each of the applied reference voltages, the controller (203) is configured to adjust the position of the proof mass along a sensing axis of the accelerometer and measure an output of the accelerometer with the proof mass in each of a plurality of adjusted positions. The controller (203) is further configured to use the measured outputs to determine a rate of change of the output with respect to the position of the proof mass, and to use the determined rates of change of the output to identify a critical voltage for which the magnitude of the rate of change of the output with respect to the position of the proof mass is minimised.

FIG. 2

EP 4 782 843 A1

**Description**

Technical Field

The present disclosure relates to calibration of accelerometers, and in particular to a method and apparatus for determining a critical operating voltage for an accelerometer.

Background

Electromechanical accelerometers are widely used to measure acceleration forces due to motion and/or vibration. Capacitive accelerometers may find use in applications including seismic sensing, vibration sensing, inertial sensing and tilt sensing. Capacitive accelerometers are typically implemented as micro electromechanical systems (MEMS) and may be manufactured from a semiconductor material such as silicon. A typical MEMS sensing structure for a capacitive accelerometer comprises a proof mass moveably mounted to a support by one or more springs to allow for motion in a sensing direction. The proof mass includes a set of electrode fingers extending from the proof mass that are interdigitated with one or more sets of fixed electrode fingers, with differential capacitance between the electrode fingers being measurable so as to detect deflection of the proof mass upon application of an inertial force in a sensing direction. An accelerometer comprising the MEMS sensing structure includes appropriate electronics for applying drive signals and measuring pickoff signals.

Such accelerometers may be operated in an "open loop" configuration, in which the electronics are arranged to drive the fixed capacitive electrode fingers with a suitable voltage waveform, such as a sine or square wave signal, such that when the proof mass moves under acceleration a pickoff voltage signal appears on the output. Alternatively, accelerometers may be operated in a "closed loop" configuration, in which the proof mass is maintained in a fixed position at all times by applying electrostatic forces to the fixed capacitive electrode fingers to achieve force balancing. The force required to maintain the proof mass in the fixed position while under acceleration can then be used to determine the acceleration applied to the accelerometer.

In order to provide an accelerometer with high sensitivity, it is desirable for the net force on the proof mass to be equal to zero when no acceleration is applied. To meet this requirement, the restoring force provided by the springs (upon displacing the proof mass) must be exactly balanced by the attractive electrostatic forces between the fixed electrode fingers and the proof mass resulting from the voltage applied to the fixed electrode fingers. If this condition is met, the proof mass is placed in a null state with effectively zero stiffness for optimal sensitivity.

In practice, the voltage required to exactly balance the restoring force of the springs is influenced by a range of factors, including the spring constant and electrode capacitance, which can be difficult to model accurately due to fabrication imperfections. It is therefore challenging to predict the optimal voltage (referred to in the following as the critical voltage, $V_{crit}$) to apply to the fixed electrode fingers to place the proof mass in a zero-stiffness null state.

It is an object of the present disclosure to provide a method for determining the critical voltage for operating a capacitive accelerometer in order to provide a capacitive accelerometer with high sensitivity.

Summary

According to a first aspect of the disclosure, there is provided an apparatus comprising:

> a controller; and
> an accelerometer comprising:

>> a proof mass moveable along a sensing axis in response to an applied acceleration;
>> one or more fixed electrodes; and
>> control circuitry;

> wherein the controller is configured to use the control circuitry to:

>> apply a series of reference voltages to the one or more fixed electrodes; and
>> for each of the applied reference voltages, to:

>>> adjust the position of the proof mass along a sensing axis of the accelerometer; and
>>> measure an output of the accelerometer with the proof mass in each of a plurality of adjusted positions;

> wherein the controller is further configured to:

use the measured outputs to determine a rate of change of the output with respect to the position of the proof mass; and

use the determined rates of change of the output to identify a critical voltage for which the magnitude of the rate of change of the output with respect to the position of the proof mass is minimised.

From a second aspect of the disclosure, there is provided a method for calibrating an accelerometer comprising a proof mass and one or more fixed electrodes; the method comprising:

applying a series of reference voltages to the one or more fixed electrodes;
for each of the applied reference voltages:

adjusting the position of the proof mass along a sensing axis of the accelerometer;
measuring an output of the accelerometer with the proof mass in each of a plurality of adjusted positions; and
using the measured output to determine a rate of change of the output with respect to the position of the proof mass;

wherein the method further comprises:
using the determined rates of change of the output to identify a critical voltage for which the magnitude of the rate of change of the output with respect to the position of the proof mass is minimised.

According to a third aspect of the disclosure, there is provided computer software which, when executed on one or more processors, causes the one or more processors to control control circuitry of an accelerometer comprising a proof mass and one or more fixed electrodes to:

apply a series of reference voltages to the one or more fixed electrodes; and
for each of the applied reference voltages, to:

adjust the position of the proof mass along a sensing axis of the accelerometer; and
measure an output of the accelerometer with the proof mass in each of a plurality of adjusted positions;

wherein the one or more processors are further caused to:

use the measured output to determine a rate of change of the output with respect to the position of the proof mass; and
use the determined rates of change of the output to identify a critical voltage for which the magnitude of the rate of change of the output with respect to the position of the proof mass is minimised.

Thus it will be seen that in accordance with the present disclosure, a critical voltage for an accelerometer is identified by applying a series of reference voltages to the fixed electrodes or proof mass of the accelerometer and measuring an output of the accelerometer with the proof mass in a plurality of different positions. The critical voltage is then identified by analysing the rate of change of accelerometer output with respect to position to determine the voltage for which the magnitude of the rate of change is minimised. By implementing a method in accordance with the present disclosure, the critical voltage (the voltage at which the proof mass is placed in a null state for optimum sensitivity) can be identified after the accelerometer has been completely fabricated. This allows for variations in accelerometer performance that may be introduced during packaging to be accounted for at the time that the critical voltage is determined. Furthermore, as the method is performed on a complete accelerometer, individual accelerometers can each be calibrated to achieve optimal operation.

In some examples, the controller may be a controller of the accelerometer. This may allow the accelerometer to determine the critical voltage dynamically, e.g., in use. However, in some alternative examples the controller may be external to the accelerometer, e.g. it may be a separate controller arranged to connect to and control the control circuitry of the accelerometer during an initial calibration process. In some examples in which the controller is external to the accelerometer, the controller may be configured to connect to the control circuitry using an interface of the accelerometer, e.g., a serial peripheral interface of the control circuitry. In some examples, the controller may be a processor.

In at least some examples, when measuring the output of the accelerometer by the control circuitry, the accelerometer may be held under a constant acceleration. The constant acceleration may be equal to zero. The constant acceleration may be equal to the gravitational acceleration experienced by the accelerometer along the sensing axis when the accelerometer is held in a fixed position. This may ensure that the accelerometer output remains stable while the critical voltage is identified, improving the accuracy of the identified voltage.

In at least some examples, the output of the accelerometer may comprise the acceleration applied to the accelerometer and a bias error. For example, if the accelerometer is experiencing no acceleration the bias error may be determined as any residual acceleration measured by the accelerometer. Similarly, if the accelerometer is subject to a known acceleration, e.g. gravitational acceleration, the acceleration measured by the accelerometer may be compared to the known acceleration to determine the bias error.

In at least some examples, the control circuitry may be configured to set the reference voltage applied to the one or more fixed electrodes based on the identified voltage. In other words, having determined the critical voltage, the control circuitry may be used to set the reference voltage based on the critical voltage so as to increase the sensitivity of the accelerometer in use.

Setting the reference voltage applied to the one or more fixed electrodes based on the critical voltage may comprise setting the reference voltage as equal to the critical voltage in some examples. However, in some examples, it may not be possible to set the reference voltage as equal to the critical voltage, e.g. due to limitations in the control circuitry. For example, the critical voltage may be greater than a maximum voltage that can be applied by the control circuitry, or the control circuitry may not be able to apply the critical voltage with sufficient precision. Thus, in at least some examples, the control circuitry may be configured to set the reference voltage as close to the critical voltage as may be achieved in the accelerometer. For example, it may comprise setting the reference voltage applied to the one or more fixed electrodes within a threshold margin of the critical voltage, e.g. within 1% of the critical voltage, or within 5% of the critical voltage, or within 10% of the critical voltage, or within 20% of the critical voltage, etc.

In at least some examples, the accelerometer may comprise a pulse width modulation signal generator arranged to apply drive signals to the proof mass or the first and second fixed electrodes. The drive signals may comprise square wave voltage signals varying between a minimum value, e.g. zero volts, and the reference voltage $V_{ref}$ at a controllable mark:space ratio. In at least some examples, the accelerometer may be a closed loop accelerometer comprising a closed loop circuit arranged to detect the accelerometer output resulting from displacement of the proof mass and to control the pulse width modulation signal generator to apply the drive signals so as to provide a net electrostatic restoring force on the proof mass for balancing the inertial force of the applied acceleration and maintaining the proof mass at a null position.

In some examples, the control circuitry may be configured to adjust the position of the proof mass by adjusting the voltage applied to the one or more fixed electrodes. Adjusting the voltage applied to the fixed electrodes may comprise applying an offset within the closed loop circuit so as to alter the voltage applied to the one or more fixed electrodes. In this way the position of the proof mass relative to the one or more fixed electrodes may be adjusted using standard, e.g. pre-existing closed loop circuitry of the accelerometer. For example, it is known to use an applied digital or analogue "trim" value within the closed loop circuit to adjust the position of an accelerometer proof mass so as to reduce bias error. The present inventors have recognised that such a "trimming" value may instead be used to controllably move the proof mass to a desired position. The position may be adjusted based on digital settings stored in a memory of the accelerometer or temporarily loaded on to it. Thus, the position of the proof mass may be adjusted to each of a plurality of known positions by controlling the additional voltage based on the trim value. Unlike existing methods for determining the critical voltage, which require that additional electronics be provided in the accelerometer, the method of the present disclosure may thus make use of existing electronics within the accelerometer, reducing cost and complexity.

In at least some examples, using the measured accelerometer output to determine a rate of change of accelerometer output with respect to the position of the proof mass may comprise determining the slope of a plot of accelerometer output against proof mass position. As explained in more detail below, if an accelerometer output is plotted against proof mass position (e.g. as determined by the trimming value), the resulting slope is dependent on the reference voltage applied to the one or more fixed electrodes or the proof mass, such that determination of the slope allows for determination of the rate of change of accelerometer output with respect to the position of the proof mass.

In at least some examples, using the measured accelerometer output to determine a rate of change of accelerometer output with respect to the position of the proof mass may comprise applying a regression operation (e.g. a linear regression) between the accelerometer output and the position of the proof mass.

In at least some examples, identifying the voltage for which the magnitude of the rate of change of accelerometer output with respect to the position of the proof mass is minimised comprises applying a regression operation between the rates of change of accelerometer output and the respective reference voltages at which the rates of change of accelerometer output were determined. In at least some such examples, applying the regression operation may comprise generating a function that predicts values of reference voltage as a function of the rate of change of accelerometer output and using the generated function to calculate the reference voltage for which the rate of change of accelerometer output is minimised.

In some examples, the accelerometer may be held at a constant temperature when measuring the output of the accelerometer. This may allow temperature dependent variations in accelerometer performance to be avoided during the calibration process.

In at least some examples, the method may be repeated at a plurality of different temperatures, such that a plurality of critical voltages may be determined at respective temperatures. In some such examples, the apparatus may comprise a temperature sensor and optional temperature control circuitry. The temperature sensor and optional temperature control circuitry may be external to the accelerometer in some examples. However, in some alternative examples, the temperature sensor and optional temperature control circuitry may form part of the accelerometer, e.g. where the accelerometer also comprises the controller. In some examples, critical voltage and temperature data may be stored in a memory of the accelerometer, e.g. in a look up table of critical voltage-temperature pairs. Thus, in at least some examples, the method may comprise identifying a critical voltage according to the method of the second aspect at each of a plurality of temperatures, and generating a look-up table of critical voltage-temperature value pairs. In some such examples, the controller may be configured to use the control circuitry to set the reference voltage applied to the one or more fixed electrodes based at least in part on an expected operating temperature of the accelerometer, or based on an actual operating temperature of the accelerometer determined after an initial calibration process has been performed in accordance with the method of the present disclosure.

In at least some examples, the one or more fixed electrodes may comprise first and second fixed electrodes arranged symmetrically either side of the proof mass along the sensing axis with a gap defined between each of the first and second fixed electrodes and the proof mass under zero applied acceleration.

In at least some examples, the accelerometer comprises a silicon MEMS structure.

In at least some examples, the proof mass may be substantially planar.

In at least some examples, the proof mass may be mounted to a fixed substrate by flexible support legs so as to be linearly moveable in a plane along the sensing axis in response to an applied acceleration, and the one or more fixed electrodes may be formed in the fixed substrate in the same plane.

In at least some examples, the proof mass may comprise a plurality of moveable capacitive electrode fingers extending perpendicular to the sensing axis and spaced apart in the direction of the sensing axis. In at least some examples, the one or more fixed electrodes may comprise a plurality of fixed capacitive electrode fingers extending perpendicular to the sensing axis and spaced apart in the direction of the sensing axis. In at least some examples, the fixed capacitive electrode fingers of the one or more fixed electrodes may be arranged to interdigitate with the moveable electrode fingers of the proof mass.

In at least some examples, the one or more fixed electrodes may comprise a first capacitive electrode and a second capacitive electrode. In some such examples, the proof mass may comprise first and second sets of moveable capacitive electrode fingers extending from the proof mass, substantially perpendicular to the sensing axis and spaced apart along the sensing axis; and the first and second fixed capacitive electrodes may comprise, respectively, first and second sets of fixed capacitive electrode fingers extending substantially perpendicular to the sensing axis and spaced apart along the sensing axis.

In at least some examples, the fixed capacitive electrode fingers of the first and/or second electrode may be arranged to interdigitate with the moveable electrode fingers of the proof mass. In some such examples, the first set of fixed capacitive electrode fingers may be arranged to interdigitate with the first set of moveable capacitive electrode fingers with a first offset in one direction along the sensing axis from a median line between adjacent fixed capacitive electrode fingers, and the second set of fixed capacitive electrode fingers may be arranged to interdigitate with the second set of moveable capacitive electrode fingers with a second offset in the opposite direction along the sensing axis from a median line between adjacent fixed capacitive electrode fingers.

Features of any aspect or example described herein may, wherever appropriate, be applied to any other aspect or example described herein. Where reference is made to different examples or sets of examples, it should be understood that these are not necessarily distinct but may overlap.

Brief description of the drawings

Non-limiting examples of the present disclosure will now be described with reference to the accompanying figures, in which:

Figure 1 is a schematic representation of a MEMS sensing structure for a capacitive accelerometer according to the present disclosure;
Figure 2 is a schematic representation of a capacitive accelerometer according to the present disclosure;
Figure 3A is an illustrative plot of accelerometer output against proof mass position for use in a method according to an example of the present disclosure;
Figure 3B is an illustrative plot of rate of change of accelerometer output with respect to position against applied voltage for use in a method according to an example of the present disclosure; and
Figure 4 is a flow diagram illustrating a method of calibrating an accelerometer according to an example of the disclosure.

Detailed description

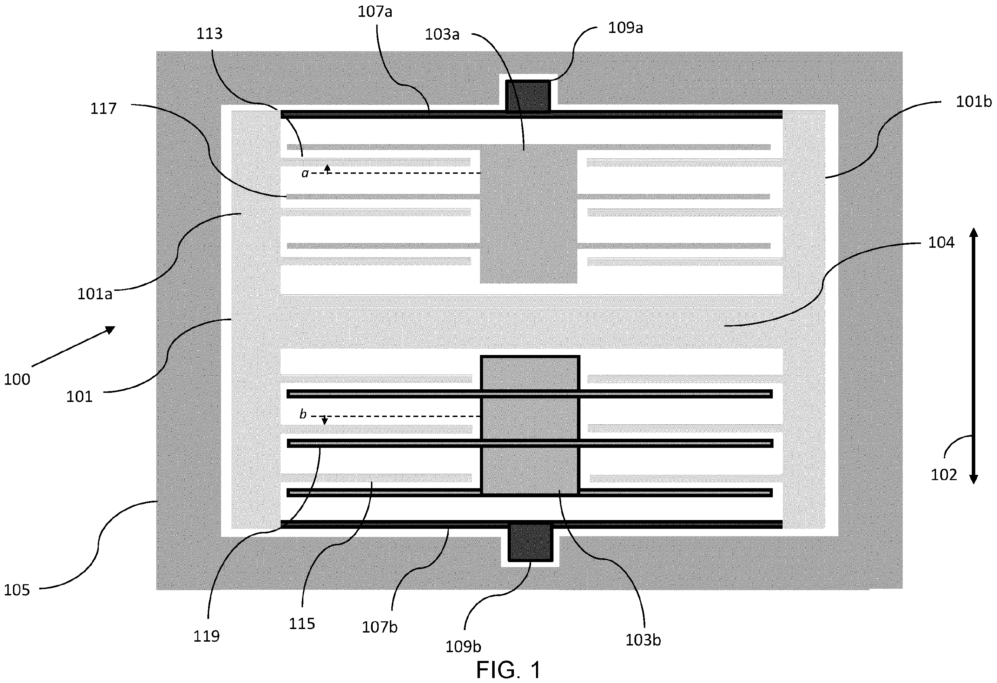

Figure 1 is a schematic representation of a sensing structure 100 for use in a MEMS capacitive accelerometer, formed from a semiconductor material layer. The sensing structure 100 comprises a resonator structure including a proof mass 101 and first and second fixed electrodes 103a, 103b, which are rigidly attached to an underlying substrate (not shown). The proof mass 101 comprises two rigid sections 101a, 101b which are elongated in the sensing axis 102, and are connected via a rigid beam 104.

The proof mass 101 is substantially planar and is mounted, via flexible supports 107a, 107b, to fixed anchor points 109a, 109b to form the resonator structure. The fixed anchor points 109a, 109b are rigidly fixed to the substrate, such that the proof mass 101 is linearly moveable in a plane along the sensing axis 102 (indicated by the double-headed arrow 102 in Figure 1) in response to an applied acceleration.

The proof mass 101, flexible supports 107a, 107b, and anchor points 109a, 109b of the resonator structure are surrounded by an external frame 105, which is also attached to the substrate (not shown in Figure 1). In the example shown in Figure 1, the flexible supports 107a, 107b are support beams that have a uniform width along the sensing axis 102, and which extend in a straight line between a respective anchor point 109a, 109b, and each of the two rigid sections 101a, 101b of the proof mass 101. However, those skilled in the art will appreciate that these supports could also be in the form of uniform serpentine or folded beams.

The proof mass 101 comprises first and second sets of moveable capacitive electrode fingers 113, 115 extending from the proof mass 101 in a direction substantially perpendicular to the sensing axis 102 and spaced apart along the sensing axis.

The first and second fixed capacitive electrodes 103a, 103b are formed in the same plane as the external frame 105, and comprise respective sets of fixed capacitive electrode fingers 117, 119 extending substantially perpendicular to the sensing axis from the central anchor points 109a, 109b which are rigidly attached to the substrate (not shown) and spaced apart along the sensing axis 102.

The first set of fixed capacitive electrode fingers 117 is arranged to interdigitate with the first set of moveable capacitive electrode fingers 113 with a first offset in one direction along the sensing axis 102 from a median line, a, between adjacent fixed capacitive electrode fingers 117. The second set of fixed capacitive electrode fingers 119 is arranged to interdigitate with the second set of moveable capacitive electrode fingers 115 with a second offset in the opposite direction along the sensing axis 102 from a median line, $b$, between adjacent fixed capacitive electrode fingers 119.

The respective offsets between the fixed capacitive electrode fingers 117, 119 and the moveable capacitive electrode fingers 113, 115 result in a small capacitor gap $d_{small}$ between adjacent pairs of fixed and moveable capacitive electrode fingers on one side of the moveable electrode fingers 113, 115, and a larger capacitor gap $d_{big}$ on the other. The ratio of the large capacitor gap to the small capacitor gap is > 2.5:1 in some examples, such that the overall capacitance between the fixed capacitive electrode fingers 117, 119 and the moveable capacitive electrode fingers 113, 115 is dominated by the capacitance derived from the small capacitor gap $d_{small}$. This ensures that the detected signals and applied drive forces (for closed loop operation) are dominated by the small capacitor gaps.

Although the first and second fixed electrodes 103a, 103b are each shown as having six capacitive electrode fingers 117, 119 in the schematic representation shown in Figure 1, it will be appreciated that significantly greater numbers of fixed and moveable capacitive electrode fingers may be present in the sensing structure 100 in practice, but are not shown in Figure 1 for simplicity of illustration.

The proof mass 101 can move in-plane relative to the fixed electrodes 103a, 103b in a direction along the sensing axis 102 in response to an applied acceleration. As the two sets of fixed capacitive electrode fingers 117, 119 are offset in opposite directions from the moveable capacitive electrode fingers 113, 115 extending from the proof mass 101, movement of the proof mass 101 can be detected in either direction. The difference in offset for the first set of fixed capacitive electrode fingers 117 and the second set of fixed capacitive electrode fingers 119, relative to the moveable capacitive electrode fingers 113 and 115 respectively, causes an attractive force between pairs of fixed and moveable electrode fingers when a drive signal (e.g. a voltage waveform) is applied to the first and second sets of fixed capacitive electrode fingers 117, 119.

If the sensing structure 100 is used in an accelerometer implementing open loop operation, movement of the proof mass 101 in response to an applied acceleration causes a change in the offset between the proof mass fingers 113, 115 and the fixed capacitive electrode fingers 117, 119. Depending on the direction of the acceleration, the size of the capacitor gap $d_{small}$ will increase for one set of fingers and will decrease for the other set. This differential change in offset can be used to calculate the acceleration of the proof mass 101, as it will cause a change in differential capacitance. If the sensing structure 100 is used in an accelerometer implementing closed loop operation, the interdigitated electrode fingers do not actually move relative to one another. Instead, differential adjustment of the pulse width modulation (PWM) of first and second drive signals applied to the first and second fixed capacitive electrode fingers 117, 119 is used to generate an electrostatic force that acts on the moveable capacitive electrode fingers 113, 115 of the proof mass 101, so that under acceleration the proof mass 101 does not move from its position under zero applied acceleration, with the inertial force of the applied acceleration instead being balanced by a net electrostatic force. In this "force feedback" mode, the electrostatic force required to balance inertial force can be used to determine the applied acceleration.

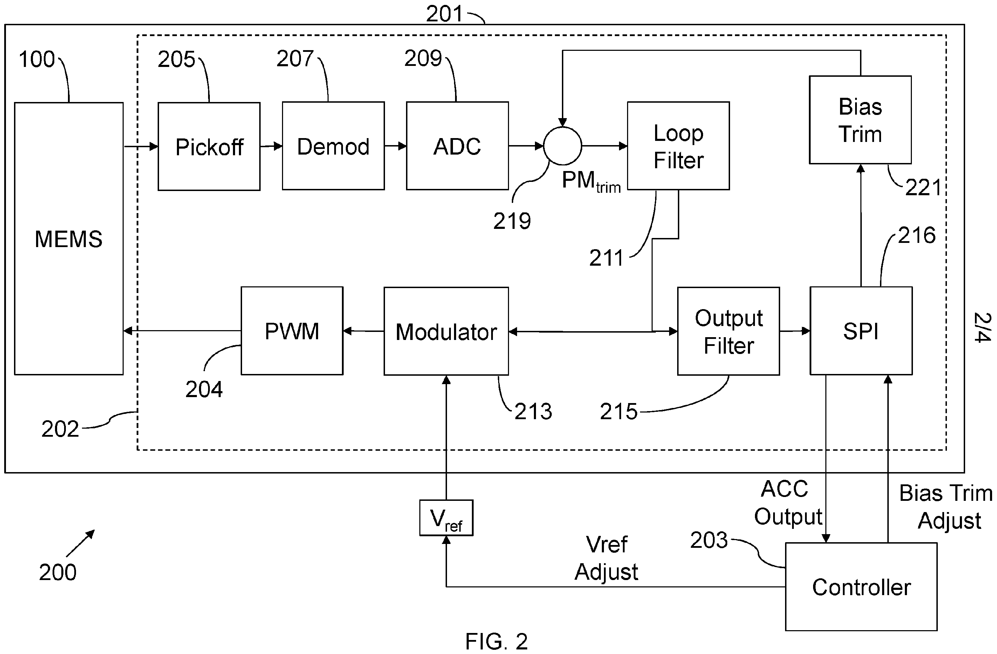

Figure 2 schematically illustrates part of an inertial measurement unit (IMU) 200 comprising a closed loop accelerometer 201 comprising the sensing structure 100 shown in Figure 1 and control circuitry comprising an ASIC 202 for applying drive signals to the sensing structure 100 and measuring pickoff signals from the sensing structure 100. The inertial measurement unit 200 also comprises a controller 203 connected to a serial peripheral interface 216 of the ASIC 202 for implementing a method of the present disclosure, as explained in more detail below. It will be appreciated that, although this example employs an ASIC, this is not essential. The control circuitry could be implemented in other ways, e.g. discrete electronics.

Although in the example shown in Figure 2, the controller 203 is within the IMU 200, it will be appreciated that this is not essential, and in some examples the controller may be external to the IMU. Similarly, it will be appreciated that although the controller 200 is separate to the accelerometer 201 in the example shown in Figure 2, in some examples the controller may be provided within the accelerometer itself.

The ASIC 202 comprises a pulse width modulation (PWM) signal generator 204 for applying drive voltages to the fixed electrodes of the accelerometer 201, and pickoff circuitry 205 for sampling an output signal from the proof mass 101. The drive voltages applied to the fixed electrodes are square wave signals varying between zero and a fixed reference voltage $V_{ref}$ with a mark:space ratio that is adjusted based on the measured pickoff signal.

When an acceleration is applied to the accelerometer 201, a pickoff signal resulting from initial displacement of the proof mass 101 from its null position is measured at the pickoff circuitry 205. This pickoff signal is demodulated at a demodulator 207, before being converted to the digital domain using an analogue to digital converter (ADC) 209. A digital signal is output from the ADC 209 to a loop filter 211, which feeds back a control signal to the PWM signal generator 204 via a modulator 213.

When an acceleration is applied to the accelerometer 201, the loop filter 211 provides a signal to the PWM signal generator 204 to adjust the mark:space ratio of the PWM drive signals. This differentially changes the forces between the fixed electrodes and proof mass 101 to drive the proof mass 101 back to the null position so as to maintain closed loop operation. As well as controlling the mark:space ratio of the PWM drive signals, the loop filter 211 provides an acceleration output from the ASIC 202 through the serial peripheral interface (SPI) 216 via an output filter 215.

In addition to circuitry for closed loop control of the accelerometer 201, the ASIC 202 includes circuitry for controlling the null position of the proof mass 101, i.e. the position of the proof mass under zero applied acceleration. Digital control can be applied via a digital offset source, $PM_{trim}$ 219, which is arranged to apply an additional digital offset to the output of the ADC 209 based on an input from a bias trim block 221. The input received form the bias trim block 221 is controlled based on control signals provided by the controller 203 via the SPI 216.

The offset applied to the ADC output causes the PWM mark:space ratio applied to the fixed electrode fingers 117, 119 to be adjusted, resulting in a change in the position of the proof mass 101. This additional offset is a digital value (equivalent to a voltage offset applied between the modulator 207 and ADC 209) that is used to adjust the position of the proof mass 101 under zero applied acceleration in order to measure the relative magnitude of the effective stiffness of the accelerometer, as explained in more detail below.

Returning to Figure 1, the flexible supports 107a, 107b connecting the proof mass 101 to the fixed anchor points 109a, 109b are narrow relative to the proof mass 101. The flexible supports 107a, 107b can thus bend in response to motion of the proof mass 101 under an applied acceleration, but also provide a mechanical restoring force to limit the distortion and to bring the proof mass 101 back to its zero-acceleration position. The displacement of the proof mass 101 is thus dependent on the stiffness of the flexible supports 107a, 107b, with lower-stiffness supports allowing for greater motion of the proof mass 101 in response to an applied acceleration.

The total force on the proof mass 101 may be defined as:

$$F_{total} = F_{inertial} + F_{spring} + F_{positive} + F_{negative}$$

Where $F_{inertial}$ is the inertial force to due acceleration a, applied to the proof mass with mass $m$ ($F_{inertial} = ma$), $F_{spring}$ is the spring restoring force due to any displacement of the proof mass ($F_{spring} = -kx$), and the last two terms are electrostatic forces induced by the capacitive fixed electrodes 103a, 103b. The electrostatic forces include the time averaged electrostatic 'positive' force in the direction of the acceleration and the time averaged electrostatic 'negative' force in the opposite direction, defined by:

$$F_{positive} = \frac{p\epsilon_o A V_{ref}^2}{2} \left[ \frac{1}{(d_{small}-x)^2} - \frac{1}{(d_{big}+x)^2} \right],$$

$$F_{negative} = -\frac{(1-p)\epsilon_o A V_{ref}^2}{2} \left[ \frac{1}{(d_{small}+x)^2} - \frac{1}{(d_{big}-x)^2} \right].$$

In the above equations, p is a value between 0 and 1 representing the duty cycle of the PWM pulses, $\varepsilon_o$ is the permittivity of free space, $V_{ref}$ is the voltage applied to the fixed electrode fingers 117, 119, and A is the total area of the capacitor, i.e., the product of the total length of the fixed electrode fingers 117, 119 times two and the thickness of the fixed electrode fingers 117, 119.

The electrostatic force on the proof mass 101 acts to pull the proof mass 101 towards the fixed electrodes 103a 103b. This force is the result of the respective capacitors formed between each of the electrode fingers 113, 115 of the proof mass 101 and the proximate fixed electrode fingers 117, 119. When an acceleration is applied, the size of the capacitor gap $d_{small}$ will increase for one set of electrode fingers and will decrease for the other set depending on the direction of the acceleration. Similarly, the size of the capacitor gap $d_{big}$ will decrease for one set of electrode fingers and will increase for the other set. As there is a fixed electrode finger 117, 119 on either side of each electrode finger 113, 115 of the proof mass 101, this results in a ('positive') force in the direction of the applied acceleration as well as a ('negative') force in the opposite direction. The balance between these forces is determined by the duty cycle p such that at p=0.5 the two forces are equal, such that the net electrostatic force is equal to zero.

Whether an acceleration is applied to the accelerometer or not, the displacement x of the proof mass 101 from the null position is kept to zero by the closed loop circuit, which adjusts the PWM duty cycle p such that the total force on the proof mass 101 is always zero in steady state. The output of the closed loop accelerometer 201 therefore provides a measure of the electrostatic force calculated from the duty cycle p. Ideally at zero acceleration the output of the accelerometer 201 is calibrated to be equal to zero. Otherwise a bias error may be present.

In the method disclosed herein, the accelerometer 201 can be maintained in a null position at either zero acceleration, or at a non-zero, but constant acceleration. The null position of the proof mass 101 is changed by an amount $x_{trim}$ by adjusting the offset applied by the digital offset source $PM_{trim}$ 219 via the closed loop digital control. With the proof mass 101 in an adjusted position, the output of the accelerometer 201 will contain an additional value due to the additional electrostatic force caused by the displacement of the proof mass 101 as a result of the offset applied via the digital offset source $PM_{trim}$ 219. Under zero acceleration, the output of the accelerometer 201, $a_{trim}$, can be written as:

$$a_{\text{trim}} = \frac{1}{m}\left(F_{spring} + F_{electro\,trim}\right) \approx -\frac{1}{m}\left[k - \epsilon_o V_{ref}^2 A\left(\frac{1}{d_{small}^3} + \frac{1}{d_{big}^3}\right)\right] x_{\text{trim}}$$

Where the term $F_{electro\,trim}$ is the electrostatic force (at $p = 0.5$) given by:

$$F_{electro\,trim} = F_{positive} + F_{negative}$$

$$= \epsilon_o A V_{ref}^2 \left[\left(\frac{1}{(d_{small} - x_{trim})^2} - \frac{1}{(d_{small} + x_{trim})^2}\right)\right.$$

$$\left. - \left(\frac{1}{\left(d_{big} + x_{trim}\right)^2} - \frac{1}{\left(d_{big} - x_{trim}\right)^2}\right)\right]$$

and approximating based on $x_{trim}$ being small.

As the spring constant and dimensions of the fixed electrodes 103a, 103b and proof mass 101 are physical properties of the sensing structure that are set at the design stage, the output of the accelerometer 201 can only be controlled after fabrication through appropriate selection of the applied reference voltage $V_{ref}$, i.e. by setting the applied voltage as equal to the 'critical' voltage, $V_{crit}$, at which the spring and electrostatic forces on the proof mass 101 are balanced should the proof mass 101 be displaced from zero position (ultimate electrostatic softening). This critical voltage can be determined analytically as:

$$V_{crit} = \sqrt{\frac{k}{A\epsilon_o\left(\frac{1}{d_{small}^3} + \frac{1}{d_{big}^3}\right)}}$$

so that

$$a_{\text{trim}} = -\frac{k}{m}\left[1 - \left(\frac{V_{ref}}{V_{crit}}\right)^2\right]x_{\text{trim}}.$$

However, in practice it is difficult to accurately determine the critical voltage analytically, as imperfections during fabrication in the MEMS structure result in the physical properties of the sensing structure being different from their modelled values.

The present inventors have recognised that the critical voltage $V_{crit}$ can instead be determined by performing a calibration process in accordance with the method of the present disclosure. As explained in more detail below, this calibration process involves applying a series of different reference voltages, $V_{ref}$, to the fixed electrodes 103a, 103b, and measuring a change in the output of the accelerometer ($a_{trim}$) as the position of the proof mass ($x_{trim}$) 101 is modulated by controlling the trimming digital value applied by the digital offset source $PM_{trim}$ 219 as shown in Figure 2 (or by applying a trimming voltage $V_{trim}$ at the output of the demodulator 207 in accelerometers with analogue control). The critical voltage, $V_{crit}$, is then determined by analysing the rate of change of an output of the accelerometer (proportional to the effective electro-mechanical stiffness) with respect to the position $x_{trim}$ with applied voltage.

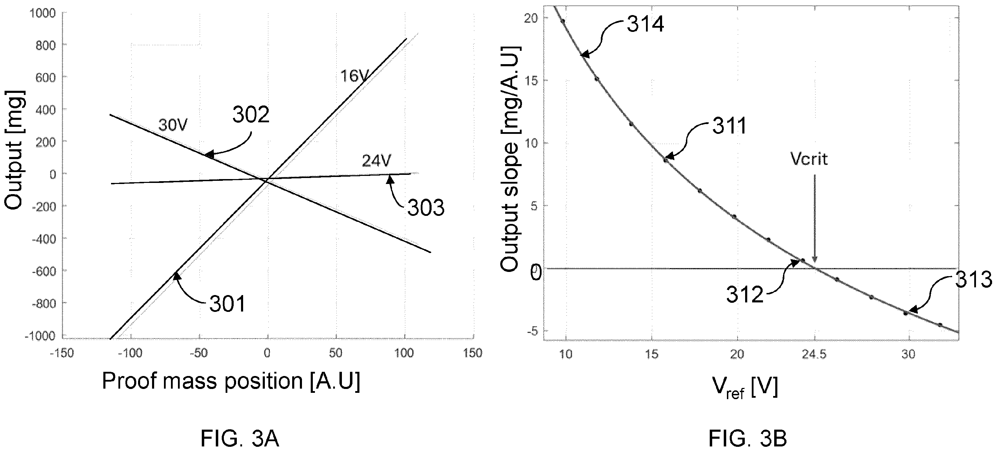

The accelerometer output can be shown to vary linearly with proof mass position (as seen in FIG. 3A and the equation above). Measurement of the change in the accelerometer output with position adjusted by adjusting the offset applied by the digital offset source $PM_{trim}$ 219 thus yields a straight-line plot having a slope, M, given by:

$$M = \frac{da_{trim}}{dx_{trim}} = -\frac{1}{m}\left[k - A\epsilon_o V_{ref}^2\left(\frac{1}{d_{small}^3} + \frac{1}{d_{big}^3}\right)\right] = -\frac{k}{m}\left[1 - \left(\frac{V_{ref}}{V_{crit}}\right)^2\right]$$

As set out above, the spring constant and dimensions of the electrodes are physical properties of the sensing structure set at the design stage, and hence cannot be controlled directly. However, as the voltage $V_{ref}$ applied to the fixed electrodes 103a, 103b is controllable, the slope M can be varied by changing the applied voltage $V_{ref}$.

When the applied voltage $V_{ref}$ is equal to the critical voltage $V_{crit}$, the slope of the plot of accelerometer output with proof mass position will be equal to zero. Thus, the critical voltage $V_{crit}$ can be determined through analysis of the slope of accelerometer output with proof mass position for a plurality of applied voltages. Specifically, if the slope M for each of a plurality of applied voltages is plotted against the applied voltages $V_{ref}$, the critical voltage $V_{crit}$ can be determined as the voltage where the slope is equal to zero.

This process is illustrated in Figures 3A and 3B. Figure 3A shows experimentally measured plots of accelerometer output (in milli-g, i.e. one thousandth of the acceleration due to gravity) against proof mass trimming position (in arbitrary units) for three different applied voltages, $V_1$=16 V, $V_2$=30 V and $V_3$=24 V, measured using an accelerometer having a critical voltage, $V_{crit}$ of 24.5 V.

In plot 301, the applied voltage $V_1$=16 V is smaller than the critical voltage $V_{crit}$, resulting in a large positive slope $M_1$ in the plot of accelerometer output against proof mass position. In plot 302, the applied voltage $V_2$=30 V is larger than the critical voltage $V_{crit}$, resulting in a large negative slope $M_2$ in the plot of accelerometer output against proof mass trimming position. In plot 303, the applied voltage $V_3$=24 is close to, but still smaller than, the critical voltage $V_{crit}$, resulting in a small positive slope $M_3$ in the plot of accelerometer output against proof mass position.

Although none of $V_1$, $V_2$ or $V_3$ are equal to the critical voltage $V_{crit}$, analysis of the slopes can be used to determine $V_{crit}$ using the method of the present disclosure. Specifically, by plotting several slope values, against the applied voltages at which they were each determined, the critical voltage $V_{crit}$ can be identified as the voltage at which the slope equals zero.

This is illustrated in Figure 3B, which shows a plot of the rate of change of accelerometer output with respect to proof mass trimming position (i.e. the slope M) against applied voltage $V_{ref}$. The plot shows rates of change of accelerometer output measured for twelve different applied voltages, including those shown in Figure 3A, which correspond to the slopes $M_1$, $M_2$ and $M_3$ and are represented by the data points labelled 311, 312 and 313 respectively. Plotting a line of best fit 314 (here a second order polynomial) through the data points shown in Figure 3B therefore allows $V_{crit}$ to be determined as the voltage at which the accelerometer output slope is equal to zero, i.e. the x axis intercept of the plot of accelerometer output slope against applied voltage. Thus, the critical voltage $V_{crit}$ can be determined in a calibration process through analysis of the slope of accelerometer output with respect to proof mass position for a plurality of applied voltages.

Although a curve-fitting algorithm can be used to find the x axis intercept, it will be appreciated that other techniques can also be used, such an interpolation or extrapolation. Alternatively, the closest data point to zero can be selected (i.e. the data point with the slope closest to zero), e.g. data point 312 in Fig. 3B.

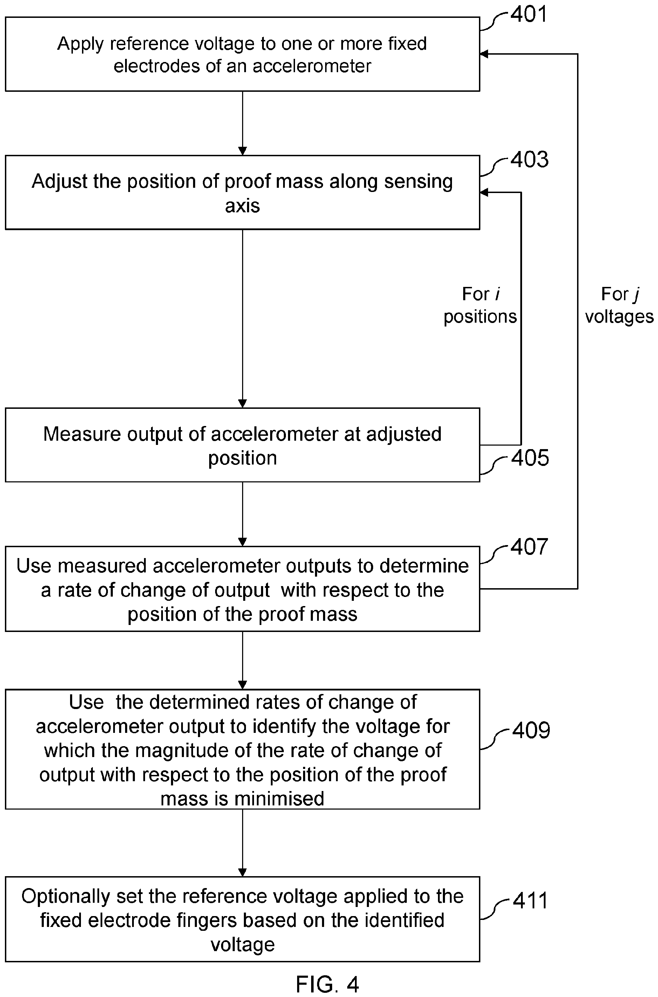

The calibration process is summarised in Figure 4, which shows a flow diagram illustrating a method of calibrating an accelerometer according to an example of the disclosure.

In step 401, a first reference voltage is applied to the one or more fixed electrodes of an accelerometer. In step 403, the position of the proof mass is adjusted along the sensing axis, e.g. by applying a trimming voltage or trimming value. In step 405, an output of the accelerometer is measured at the adjusted position. Steps 403 and 405 are then repeated a plurality of times, with the accelerometer in each of i different positions. Depending on the number of positions used, the slope of accelerometer output against position can be determined more or less accurately, with more measurement positions providing a more accurate slope value for use in the later steps of the method.

In step 407, a rate of change (i.e. slope) of accelerometer output with respect to the position of the proof mass is determined, based on the m position measurements, for the applied reference voltage. The process then returns to step 401, and steps 401-407 are repeated with a different reference voltage. This is then repeated for a plurality of $j$ different reference voltages. Depending on the number of different reference voltages for which a slope of accelerometer output against position is determined, the critical voltage can be determined more or less accurately, with more reference voltages providing a greater number of data points when plotting slope against applied voltage, as described above in relation to Figure 3B.

Once rates of change of accelerometer output with respect to the position of the proof mass have been determined for each of a plurality of $j$ voltages, the determined rates of change of accelerometer output are used, in step 409, to identify the voltage for which the magnitude of the rate of change of accelerometer output with respect to the position of the proof mass is minimised (i.e. the critical voltage). This may be achieved, for example, by plotting the rates of change against the applied voltages and identifying the x-intercept of a line of best fit, as explained above.

Having determined the critical voltage, the reference voltage applied to the fixed electrode fingers of the accelerometer may optionally be set based on the identified voltage in step 411. This may comprise setting the reference voltage applied to the fixed electrode fingers as equal to the reference voltage in some examples, but in some other examples it may comprise setting the reference voltage close to, e.g. within a threshold value of the identified voltage.

It will be appreciated by those skilled in the art that the disclosure has been illustrated by describing one or more specific examples thereof, but is not limited to these aspects; many variations and modifications are possible, within the scope of the accompanying claims.

**Claims**

1. An apparatus comprising:

   a controller; and
   an accelerometer comprising:

   a proof mass moveable along a sensing axis in response to an applied acceleration;
   one or more fixed electrodes; and
   control circuitry;

   wherein the controller is configured to use the control circuitry to:

   apply a series of reference voltages to the one or more fixed electrodes; and
   for each of the applied reference voltages, to:

   adjust the position of the proof mass along a sensing axis of the accelerometer; and
   measure an output of the accelerometer with the proof mass in each

   of a plurality of adjusted positions;

   wherein the controller is further configured to:

   use the measured outputs to determine a rate of change of the output with respect to the position of the proof mass; and
   use the determined rates of change of the output to identify a critical voltage for which the magnitude of the rate of change of the output with respect to the position of the proof mass is minimised.

2. The accelerometer of claim 1, wherein the control circuitry is configured to set the reference voltage applied to the one or more fixed electrodes based on the identified voltage.

3. The accelerometer of claim 2, wherein setting the reference voltage applied to the one or more fixed electrodes based on the identified voltage comprises setting the reference voltage applied to the one or more fixed electrodes as equal to the identified voltage.

4. The accelerometer of any preceding claim, wherein the control circuitry is configured to adjust the position of the proof mass by adjusting the voltage applied to the one or more fixed electrodes.

5. The accelerometer of any preceding claim, wherein using the measured accelerometer output to determine a rate of change of accelerometer output with respect to the position of the proof mass comprises determining the slope of a plot of accelerometer output against proof mass position.

6. The accelerometer of any preceding claim, wherein identifying the voltage for which the magnitude of the rate of change of accelerometer output with respect to the position of the proof mass is minimised comprises applying a regression operation between the rates of change of accelerometer output and the respective reference voltages at which the rates of change of accelerometer output were determined.

7. The accelerometer of claim 6, wherein applying the regression operation comprises generating a function that predicts reference voltage as a function of the rate of change of accelerometer output and using the generated function to calculate the reference voltage for which the rate of change of accelerometer output is minimised.

8. The accelerometer of any preceding claim, wherein when measuring the output of the accelerometer by the control circuitry, the accelerometer is held under a constant acceleration.

9. The accelerometer of any preceding claim, wherein the output of the accelerometer comprises an acceleration applied to the accelerometer and a bias error.

10. The accelerometer of any preceding claim, wherein when measuring the output of the accelerometer, the accelerometer is held at a constant temperature.

11. A method for calibrating an accelerometer comprising a proof mass and one or more fixed electrodes; the method comprising:

applying a series of reference voltages to the one or more fixed electrodes;
for each of the applied reference voltages:

adjusting the position of the proof mass along a sensing axis of the accelerometer;
measuring an output of the accelerometer with the proof mass in each of a plurality of adjusted positions; and
using the measured output to determine a rate of change of the output with respect to the position of the proof mass;

wherein the method further comprises:
using the determined rates of change of the output to identify a critical voltage for which the magnitude of the rate of change of the output with respect to the position of the proof mass is minimised.

12. The method of claim 11, wherein using the measured accelerometer output to determine a rate of change of accelerometer output with respect to the position of the proof mass comprises determining the slope of a plot of accelerometer output against proof mass position.

13. The method of claim 11 or 12, wherein using the measured output to determine a rate of change of accelerometer output with respect to the position of the proof mass comprises applying a linear regression operation between the accelerometer output and proof mass position.

14. The method of any of claims 11 to 13, further comprising identifying a critical voltage according to the method of claim 11 at each of a plurality of temperatures, and generating a look-up table of critical voltage-temperature value pairs.

15. Computer software which, when executed on one or more processors, causes the one or more processors to control control circuitry of an accelerometer comprising a proof mass and one or more fixed electrodes to:

apply a series of reference voltages to the one or more fixed electrodes; and

for each of the applied reference voltages, to:

adjust the position of the proof mass along a sensing axis of the accelerometer; and
measure an output of the accelerometer with the proof mass in each of a plurality of adjusted positions;

wherein the one or more processors are further caused to:

use the measured output to determine a rate of change of the output with respect to the position of the proof mass; and
use the determined rates of change of the output to identify a critical voltage for which the magnitude of the rate of change of the output with respect to the position of the proof mass is minimised.

FIG. 1

FIG. 2

EP 4 782 843 A1

**FIG. 3B**

**FIG. 3A**

Apply reference voltage to one or more fixed electrodes of an accelerometer ⌐401

↓

Adjust the position of proof mass along sensing axis ⌐403

For *i* positions

For *j* voltages

↓

Measure output of accelerometer at adjusted position ⌐405

↓

Use measured accelerometer outputs to determine a rate of change of output with respect to the position of the proof mass ⌐407

↓

Use the determined rates of change of accelerometer output to identify the voltage for which the magnitude of the rate of change of output with respect to the position of the proof mass is minimised ⌐409

↓

Optionally set the reference voltage applied to the fixed electrode fingers based on the identified voltage ⌐411

FIG. 4

Europäisches
Patentamt
European
Patent Office
Office européen
des brevets

**EUROPEAN SEARCH REPORT**

Application Number

EP 25 27 5003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/168085 A1 (GAFFORELLI GIACOMO [IT] ET AL) 15 June 2017 (2017-06-15) * the whole document * ----- | 1-15 | INV. G01P15/125 G01P15/13 G01P21/00 |
| X | US 2009/223276 A1 (RUDOLF FELIX [CH] ET AL) 10 September 2009 (2009-09-10) * the whole document * ----- | 1-15 | ADD. G01P15/08 |

TECHNICAL FIELDS
SEARCHED (IPC)

G01P

The present search report has been drawn up for all claims

| Place of search | Date of completion of the search | Examiner |
|---|---|---|
| Munich | 10 June 2025 | Springer, Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

  ...................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 27 5003

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | | Publication date | Patent family member(s) | | Publication date |
|---|---|---|---|---|---|
| US 2017168085 | A1 | 15-06-2017 | CN | 108369245 A | 03-08-2018 |
| | | | EP | 3387450 A1 | 17-10-2018 |
| | | | US | 2017168085 A1 | 15-06-2017 |
| | | | US | 2021102970 A1 | 08-04-2021 |
| | | | WO | 2017098458 A1 | 15-06-2017 |
| US 2009223276 | A1 | 10-09-2009 | EP | 2098823 A1 | 09-09-2009 |
| | | | US | 2009223276 A1 | 10-09-2009 |

EPO FORM P0459

For more details about this annex : see Official Journal of the European Patent Office, No. 12/82